# EUROPEAN PATENT SPECIFICATION

(11) **EP 4 099 585 B1**
(45) Date of publication and mention of the grant of the patent: **18.11.2026**
(21) Application number: 21176893.2
(22) Date of filing: 31.05.2021
(51) Int. Cl.: H04B 10/70, H04L 9/08

(54) **QUANTUM KEY DISTRIBUTION WITH ACTIVE SAGNAC INTERFEROMETER**
QUANTENSCHLÜSSELVERTEILUNG MIT AKTIVEM SAGNAC-INTERFEROMETER
DISTRIBUTION DE CLÉ QUANTIQUE AVEC INTERFÉROMÈTRE DE SAGNAC ACTIF

(43) Date of publication of application: 07.12.2022
(73) Proprietor: Fraunhofer-Gesellschaft zur Förderung der angewandten Forschung e.V., 80686 München (DE)
(72) Inventor: Marques Muniz, André Luiz, 07743 Jena (DE); Spiess, Christopher, 07743 Jena (DE); Cabrejo Ponce, Meritxell, 07743 Jena (DE); Steinlechner, Fabian, 07745 Jena (DE)
(74) Representative: Louis Pöhlau Lohrentz

(56) References cited:
- US-B2- 8 242 435
- ALARC\'ON ET AL: "Polarization-independent single-photon switch based on a fiber-optical Sagnac interferometer for quantum communication networks", ARXIV.ORG, CORNELL UNIVERSITY LIBRARY, 201 OLIN LIBRARY CORNELL UNIVERSITY ITHACA, NY 14853, 4 September 2020 (2020-09-04), XP081757253
- LAN-TIAN FENG ET AL: "Frequency-degenerate multi-photon entangled state generation with silicon", ARXIV.ORG, CORNELL UNIVERSITY LIBRARY, 201 OLIN LIBRARY CORNELL UNIVERSITY ITHACA, NY 14853, 6 December 2018 (2018-12-06), XP080989791
- LIU MAO TONG ET AL: "Non-maximal polarization-entangled photons with spectrally-varying non-maximality", 2015 11TH CONFERENCE ON LASERS AND ELECTRO-OPTICS PACIFIC RIM (CLEO-PR), IEEE, vol. 3, 24 August 2015 (2015-08-24), pages 1 - 2, XP032841201, [retrieved on 20160107], DOI: 10.1109/CLEOPR.2015.7376442

## Description

The present invention provides a source for polarization entangled photon pairs for Quantum Key Distribution (QKD) according to the preamble of claim 1 and a method for the generation of polarization entangled photon pairs for Quantum Key Distribution (QKD) according to the preamble of claim 13.

Classical encryption relies on exponentially mathematical decompositions to secure transferred data, which can be easily stolen by an eavesdropper. In contrast to that, Quantum Key Distribution (QKD) is known as a method which enabled two receivers, commonly known as the two parties Alice and Bob, to produce a key by an unconditional security system based only on the laws of physics. After the production, the key can be used to encrypt and decrypt a message. The advantage to classical key generation is that the key generated by Quantum Key Distribution (QKD) is based on quantum mechanical effects and allows the two parties Alice and Bob to detect a third party, commonly known as Eve, trying to gain knowledge of the key. To gain knowledge of the key Eve must in some way measure the quantum system. But in quantum mechanics a measurement process disturbs the quantum system and can be detected by Alice and Bob.

Known Quantum Key Distribution (QKD) methods are based on the generation of single photon pulses or weak coherent pulses by one of the two parties. Other methods are based on entangled photon pairs either generated by one of the parties or by a separate and/or untrusted source, commonly known as a party called Charlie. In known Quantum Key Distribution (QKD) systems and methods, the source generates the entangled photon pairs and distributes the signal and idler photon of each entangled photon pair to the two receivers Alice and Bob. For Alice and Bob, it is possible to determine whether the received photon pairs are entangled or not. By this system and method, the source has no knowledge of the generated key and no possibility to control the key generation.

Known sources based on a Sagnac loop configuration with free space or fiber components generate polarization entangled photon pairs for Quantum Key Distribution (QKD) in one specific state. The state of the polarization entangled photon pairs of these sources is adjusted by the polarization of the pump laser of the source. In known systems the adjustment of the state of the source is performed before the start of the photon pair generation and before the photon pair distribution.

The United States patent US 8,242,435 B2 discloses a quantum entangled photon pair generating device.

It is an object of the present invention to provide an improved, more flexible and costefficient source, system and method for Quantum Key Distribution (QKD).

According to the present invention, a source of polarization entangled photon pairs for Quantum Key Distribution (QKD) is provided according to claim 1.

This object is achieved by a source of polarization entangled photon pairs for Quantum Key Distribution (QKD), preferably the polarization entangled photon pairs are used for the generation of a key by Quantum Key Distribution (QKD),
comprising a laser, a circulator, a fiber based Sagnac loop and a wavelength division multiplexing (WDM) means, whereby the laser generates a laser beam and the laser beam is guided through the circulator to the fiber based Sagnac loop, and whereby the fiber based Sagnac loop comprises a polarizing beam splitter (PBS) and a polarization maintaining fiber, a Second-Harmonic-Generation (SHG) means, and a down conversion (DC) means, whereby the Second-Harmonic-Generation (SHG) means is pumped by the laser beam and generated pump photons and the down conversion (DC) means is pumped by the pump photons and generates photon pairs, and whereby the polarizing beam splitter (PBS), the polarization maintaining fiber, the Second-Harmonic-Generation (SHG) means, and the down conversion (DC) means are arranged in a Sagnac configuration in order to generate polarization entangled photon pairs, and whereby the polarization entangled photon pairs are guided from the fiber based Sagnac loop through the circulator to the wavelength division multiplexing (WDM) means, and whereby the wavelength division multiplexing (WDM) means comprises two or more WDM-output ports. According to the invention, the source comprises a first control means arranged in the fiber based Sagnac loop and a second control means arranged behind one or more WDM-output ports, and the first and/or second control means control the state of the polarization entangled photon pairs.

The object is further achieved by a system for Quantum Key Distribution (QKD), comprising a source according to one of the embodiments as described here, a network, and at least a first and a second receiver,
whereby each entangled photon pair comprises a signal photon and an idler photon, and whereby the network comprises at least a first quantum channel and a second quantum channel, whereby the first quantum channel is arranged between the source, preferably between the first WDM-output port of the source, and the first receiver enabling the transmission of signal photons from the source to the first receiver, and the second quantum channel is arranged between the source, preferably between the second WDM-output port of the source, and the second receiver enabling the transmission of idler photons from the source to the second receiver, and the receivers comprise each a measurement means and a logic.

According to the invention, the source transmits the setting of the first and/or second control means or information of the state of the generated photon pair to the first and/or second receiver in order to enable the first and second receiver to generate a key by Quantum Key Distribution (QKD).

The object is further achieved by a method for the generation of polarization entangled photon pairs for Quantum Key Distribution (QKD), preferably the polarization entangled photon pairs are used for the generation of a key between two receivers by Quantum Key Distribution (QKD), comprising a source with a laser, a circulator, a fiber based Sagnac loop with a Second-Harmonic-Generation (SHG) means and a Down-Conversion (DC) means, a wavelength division multiplexing (WDM) means and a first and second control means, and comprising a network and at least a first and a second receiver, comprising the steps
i) generation of a laser beam by the laser and guidance of the laser beam to the Sagnac loop, preferably guidance through the circulator to the Sagnac loop,
ii) generation of an entangled photon pair in the fiber based Sagnac loop by
   - generation of a pump photon by second harmonic generation by the laser beam and the Second-Harmonic-Generation (SHG) means, and
   - generation of a photon pair by spontaneous parametric down conversion (SPDC) by the pump photon and the Down-Conversion (DC) means,
iii) guidance of the entangled photon pair from the fiber based Sagnac loop to the wavelength division multiplexing (WDM) means, preferably guidance through the circulator to the wavelength division multiplexing (WDM) means,
iv) transmission of the signal and idler photon of the entangled photon pair to the first and second receiver by the wavelength division multiplexing (WDM) and the network,
v) polarization measurement of the signal and idler photon of the entangled photon pair by the first and second receiver,
vi) repetition of the steps i) to v), preferably until enough photons are detected by the first and second receiver to generate a key by Quantum Key Distribution (QKD),
vii) generation of a key, preferably by additional steps of a quantum key distribution protocol.

According to the invention, the state of each generated entangled photon pair is controlled by the first control means in step ii) and the second control means in step iv), and in order to enable the first and second receiver to generate a key in step vii) the source transmits the setting of the first and second control means from step ii) and iv) or information of the state of the generated photon pair to the first and/or the second receiver.

An advantage of the inventive source and method is that the key cannot be generated by the two receivers without the information from the source of the state of each entangled photon pair, and at the same time the source cannot gain any information of the generated key. Thus, the needs of all involved parties are fulfilled, the economical need of the source generating and selling entangled photon pairs and the security need of the two receivers.

An advantage of the inventive system and method is the realization of an even higher security level of a quantum key distribution by the possibility to adjust and control the state of each generated entangled photon pair. This advantage is based on the inventive source and the inventive method by the possibility to generate entangled photon pairs in different states by the first and second control means. By the inventive system the source can be involved in the QKD protocol.

An advantage of the inventive system is the precise control and modulation of the generated states by the first and second control means. Each control means is located on a specific point in the source and acts with a specific effect on one part of the state of the generated entangled photon pair. In contrast to that, in known Quantum Key Distribution (QKD) systems commonly bulk optic sources are used, because of the stable operations and high photon-pair generation rates. To achieve the benefits of a bulk optic source and since there are no precise and fast switching components for bulk optics, these bulk optic sources generate entangled photon pairs only in one fixed state for Quantum Key Distribution (QKD).

Quantum Key Distribution (QKD) with entangled photon pairs is a method to generate a key between two receivers to encrypt and decrypt a message. For the key generation in known systems, a source produces entangled photon pairs and distributes the signal and idler photons of each pair to the two receivers, what is also called raw key exchange. The receivers measure the photons. After that, the receivers follow a protocol to generate the key out of the detected photons, what is also called key sifting. In addition, further steps after key sifting can take place like error correction, and/or privacy amplification, and/or authentication, what is also called key distillation.

In contrast to known Quantum Key Distribution (QKD) methods, the inventive source introduces an additional control factor leading to an additional step in the inventive method to enable the two receivers to generate the key. The additional control factor in the inventive source is realized by the first and the second control means in order to control the state of the generated entangled photon pair, preferably to control the state of each generated entangled photon pair separately.

With the inventive source it is possible to generate a multitude of polarization entangled photon pairs one after the other, whereby the state of each pair can be controlled by the first and/or second control means. Due to the unknown state of each entangled photon pair for the receivers, the two receivers need the information from the source in order to generate a key. This leads to an additional step in contrast to known Quantum Key Distribution (QKD) methods in or after the key sifting process. The receivers, for example have to know whether the detected photons of an entangled pair are correlated or anti-correlated in order to generate the same key. In the inventive method the unknown state of each generated photon pair leads to the additional step for the receivers to match the state with the sifted key to generate the sequence of bits for encryption and decryption. By the use of the inventive source or method, a specific protocol has to be followed to generate a key, for example at least one of the receivers has to rotate bits of the sifted key depending on the state of the photon pairs.

An advantage of using entangled photon pairs for Quantum Key Distribution (QKD) lies, among other things, in the additional security by the perfect correlation of the signal and idler photon of an entangled photon pair and the lower susceptibility for side attacks.

In a preferred embodiment, the source is capable to generate entangled photon pairs in at least four states, preferably four full entangled states. In a preferred embodiment, the source generates a multitude of entangled photon pairs, whereby each entangled photon pair has one out of the at least four states.

In a preferred embodiment, the four entangled states differ by its phase *φ*, preferably by a phase change 0 < Δ*φ* < 2*π* and/or by its polarization correlation of the entangled photons, preferably by a unitary transformation of the polarization of at least one photon of each pair.

To generate four different states by a single source and the use of two control means, the first and the second control means each are capable to switch between at least a first and a second switching condition of the first control means, and a first and a second switching condition of the second control means.

In a preferred embodiment, the first control means can switch between at least two switching conditions in step ii), preferably at least a first switching condition and a second switching condition of the first control means, in order to set the phase of the state of the generated entangled photon pair. By the switching of the first control means between the first and the second switching condition of the first control means a phase change of 0 < Δ*φ* < 2*π* is applied on the state.

In a preferred embodiment, the second control means can switch between at least two switching conditions in step iv), preferably at least a first switching condition and a second switching condition of the second control means, in order to introduce a unitary transformation of the polarization of at least one photon of each pair in order to set the state of the generated entangled photon pair. By the switching of the second control means between the first and the second switching condition of the second control means a unitary transformation of the polarization of at least one photon of each pair is applied on the state.

Thus, polarization entangled photon pairs in four different states can be generated by the inventive source with the first and second control means with each two switching conditions. An original state of the source, also called ground state, a second state by the change of the phase by Δ*φ* of the ground state by the first control means, a third state by the unitary transformation of the polarization of at least one photon by the second control means, and a fourth state by the change of the phase by Δ*φ* and the unitary transformation by the first and the second control means.

In a preferred embodiment, the ground state is one of the four Bell states.

The source generates a multitude of entangled photon pairs, one after each other. In a preferred embodiment, the state of each generated polarization entangled photon pair is controlled separately. Controlled separately means here, that the state of two following entangled photon pairs can differ, but does not have to. In a preferred embodiment, the state is controlled by a phase change Δ*φ* of the pump photon or the down converted photons, and/or the state is adjusted by a polarization change, a unitary transformation of the polarization, of the signal and/or idler photon of the entangled photon pair. Preferably, the phase of the pump photon is transferred to the photon pair via the non-linear process of spontaneous parametric down conversion (SPDC).

In a preferred embodiment, the source generates a multitude of polarization entangled photon pairs in two out of the four Bell states and two additional full entangled states, whereby the two additional full entangled states differ from the two generated Bell states by the phase Δ*φ*, with 0 < Δ*φ* < 2*π* .

In a preferred embodiment, the source generates a multitude of polarization entangled photon pairs in the four Bell states, preferably by the control of the first and second control means. For the generation of photon pairs in the four Bell states a phase change by Δ*φ = π* by the first control means and unitary transformation of the polarization by linear ± 90° by the second control means is applied. In a preferred embodiment, each polarization entangled photon pair generated in the source has one out of the four Bell states.

The four Bell states are four maximally entangled quantum states | Φ⁺〉, | Φ⁻〉, | Ψ⁺〉 and | T⁻〉 of two qubits. These are the four possible states of the polarization entangled photon pair generated in the source. The four Bell states can be written in as $\left|{Φ}^{+}\right〉 = \frac{1}{\sqrt{2}} \left(\left|H\right〉\left|H\right〉+\left|V\right〉\left|V\right〉\right) , \left|{Φ}^{-}\right〉 = \frac{1}{\sqrt{2}} \left(\left|H\right〉\left|H\right〉-\left|V\right〉\left|V\right〉\right) , \left|{Ψ}^{+}\right〉 = \frac{1}{\sqrt{2}} \left(\left|H\right〉\left|V\right〉+\left|V\right〉\left|H\right〉\right)$ and $\left|{Ψ}^{-}\right〉 = \frac{1}{\sqrt{2}} \left(\left|H\right〉\left|V\right〉-\left|V\right〉\left|H\right〉\right)$, whereby H denotes a horizontal linear polarization and V denotes a vertical linear polarization.

For example, the state | ψ⁻〉 means, that if the first receivers measure its photon in the linear horizontal and vertical polarization base, the outcome would be perfectly random with a probability of 1/2 to measure H (horizontal linear polarization) or V (vertical linear polarization), denoted by the first | 〉 and the third | 〉 in the (). When the second receivers measure its qubit in the same base, the outcome would be in the case of the state | T⁻〉 perfect anticorrelated. This anticorrelation is in the case of the state | ψ⁻〉 present in all bases, not only in the H/V bases. This would lead to an outcome H, +, L of the second receivers for a measurement of V, -, R in the first receivers and so on, whereby +, - denotes linear polarization at +/- 45° and L, R denotes left and right circular polarization.

In a preferred embodiment, the state of the generated polarization entangled photon pair is adjusted randomly for each pair or is generated in a deterministic alternating order.

In a preferred embodiment, the switching rate (also called repetition rate) of the first and/or second control means is equal or higher than the generation rate of the entangled photon pairs. The generation rate of the entangled photon pairs can be determined by a pulsed laser. By the condition that the switching rate of the first and/or second control means is equal or higher than the generation rate of the entangled photon pairs, it can be ensured that each generated entangled photon pair could have an individual adjusted state out of the four states.

In a preferred embodiment, the first and/or second control means enable a time domain and/or state domain encrypted sifted key generation between the source and the first and second receiver. This means, that the sifted key is still encrypted by the mission knowledge of the state of each entangled photon pair. The knowledge of the state of each entangled photon pair is necessary for at least one receiver in order to enable the generation of the same key by both receivers. This is realized by the generation of the entangled photon pairs in different states and that the state is revealed after the key sifting. The time domain encryption is obtained by the change of the states of the generated entangled photon pairs one after each other.

In a preferred embodiment, the generation rate of the entangled photon pairs is up to 10 thousand photon pairs per second, preferably up to 1 million photon pairs per second, more preferably more than 100 million photon pairs per second. The generation rate of the entangled photon pairs is realized by the repetition rate of a pulsed laser in the source.

In a preferred embodiment, the switching rate of the first and/or second control means is up to 10 kHz, preferably up to 1 MHz, more preferably more than 100 MHz.

In a preferred embodiment, the laser and the first and second control means are synchronized in order to control the state of the generated entangled photon pair. In a preferred embodiment, the synchronization is realized by a clock and/or a computer, preferably connected with the laser and the first and second control means.

In a preferred embodiment, for the key generation in step vii) the setting of the first and/or second control means or the information of the state of the entangled photon pair is used by one or more receivers in order to generate the same key at the first and second receiver.

In a preferred embodiment, for the key generation in step vii) in order to generate the same key at the first and second receiver a bit flip of the measurement outcome depending on the measurement base and/or the setting of the first and/or second control means or the information of the state of the entangled photon pair is realized by the first and/or second receiver.

In a preferred embodiment, the transmission of the information of the first and/or second control means or the state takes place in such a way, that the information arrives after the measurement in step v) at the first and/or second receiver.

In a preferred embodiment for a source capable of generating entangled photons in the four Bell states, the source generates for example in its ground state, also called ground condition, a first Bell state, whereby in the ground condition the first and the second control means causes no phase change and no polarization change in the source, or causes a phase change and/or a polarization change to set the source in its ground state in the first Bell state. In a preferred embodiment, the source generates in its second condition a second Bell state, whereby in the second condition of the source the first control means causes a phase change Δ*φ = π* and the second control means causes no additional polarization change in the source, preferably by only switching the first control means. In a preferred embodiment, the source generates in its third condition a third Bell state, whereby in the third condition of the source the first control means causes no additional phase change in the source and the second control means causes a polarization change, preferably a unitary transformation of the polarization in the source, preferably by only switching the second control means. In a preferred embodiment, the source generates in its fourth condition a fourth Bell state, whereby in the fourth condition of the source the first control means causes a phase change Δ*φ = π* in the source and the second control means causes a polarization change in the source, preferably by switching the first and the second control means.

In a preferred embodiment, the first control means comprises a phase modulator.

In a preferred embodiment, the phase modulator is an electro-optic-modulator (EOM) or an acousto-optic-modulator (AOM) with a non-linear crystal or waveguide. In a preferred embodiment, the phase modulation is realized by an optical second order non-linear effect, preferably by the Pockels-Effect. An advantage of the use of a phase modulator as a waveguide is the precise and high modulation speed of the generated states.

In a preferred embodiment, the phase modulator is a waveguide, preferably a waveguide with a surrounding material and a channel with higher refractive index compared to the surrounding material.

In a preferred embodiment, the first control means is switchable between two or more conditions, namely at least a first switching condition and a second switching condition of the first control means. In a preferred embodiment, the first control means applies a phase change of 0 < Δ*φ* < 2*π* on the state, preferably by switching between the first and second switching condition of the first control means.

In a preferred embodiment, in the first switching condition no phase change is performed in the source, or a phase is set in the source in order to generate photon pairs in the first state. In a preferred embodiment, in the second switching condition a phase change is performed in the source, preferably a phase change of 0 *<* Δ*φ <* 2*π* , preferably *φ* = *π* for the generation of two Bell states.

The first switching condition of the first control means guides the light, preferably the photon, without an additional phase change through the first control means. No additional phase change means here, that the first control means in its first switching position introduces no phase change or can introduce a phase change in the source in order to generate entangled photon pairs in the first state of the source, whereby the phase change from the first to the second switching position allows the generation of entangled photon pairs in a second or third or fourth state.

In a preferred embodiment, the two or more first conditions of the first control means, preferably the first and second switching condition of the first control means, are the information of the setting of the first control means.

In a preferred embodiment, the first control means is arranged behind the Second-Harmonic-Generation (SHG) means, preferably before the Down-Conversion (DC) means. In a preferred embodiment, the first control means controls and/or changes the photon behind the Second-Harmonic-Generation (SHG) means, preferably the photon before the Down-Conversion (DC) means, more preferably the pump photon, preferably the phase of the pump photon. Phase modulation means here a phase shift of the light guided through the first control means. The phase of the pump photon is transferred to the photon pair via the non-linear process of spontaneous parametric down conversion (SPDC).

In a preferred embodiment, the first control means adjusts the phase of the state of the generated entangled photon pair, preferably by a phase change of the pump photon or the down converted photons, or the down converted photon pair. In a preferred embodiment, in step ii) the first control means is set to its first switching condition or its second switching condition in order to control the phase of the state of the generated entangled photon pair, preferably by the change of the phase of the pump photon.

In a preferred embodiment, the phase modulation is realized by an application of an electric field on the non-linear crystal or waveguide leading to a change of the refractive index of the non-linear crystal or waveguide.

In a preferred embodiment, the phase shift is linear to the applied electric field. In a preferred embodiment, the electric field is in the range of 2 V to 30 V, preferably in the range of 2 V to 10 V for photons in the range of 630 nm up to 1550 nm.

In a preferred embodiment, the switchable first control means has a switching rate (repetition rate) up to 50 MHz, preferably up to 100 MHz, more preferably up to 500 MHz.

In a preferred embodiment, the switching rate (repetition rate) of the phase shift is up to 10 kHz, preferably up to 1 MHz, more preferably more than 100 MHz.

In a preferred embodiment, the switching of the first control means is chosen randomly, preferably for each generated pair, preferably by a random number generator, more preferably by a quantum random number generator. In a preferred embodiment, the switching of the first control means is in a deterministic alternating order. In a preferred embodiment, the source comprises a random number generator, preferably a quantum random number generator, in order to control the first control means.

In a preferred embodiment, the second control means comprises a polarization modulator. Polarization modulation means here a unitary transformation of the polarization of the photon by the polarization modulator.

In a preferred embodiment, the second control means comprises one or more polarization modulators. In a preferred embodiment, the polarization modulator is an electro-optic-modulator (EOM) or an acousto-optic-modulator (AOM) with a non-linear crystal or waveguide or a fast-switching waveplate. In a preferred embodiment, the polarization modulation is realized by an optical second order non-linear effect, preferably by the Pockels-Effect. An advantage of the use of a polarization modulator as a waveguide is the precise and high modulation speed of the generated states.

In a preferred embodiment, the polarization modulator is a waveguide, preferably a waveguide with a surrounding material and a channel with higher refractive index compared to the surrounding material.

In a preferred embodiment, the second control means is switchable between two or more second conditions, namely at least a first switching condition and a second switching condition of the second control means. In a preferred embodiment, the second control means applies a unitary transformation of the polarization of at least one photon of the entangled photon pair.

In a preferred embodiment, in the first switching condition of the second control means no polarization change is performed in the source, or a polarization modulation is set in the source in order to generate photon pairs in the first state. In a preferred embodiment, in the second switching condition of the second control means a unitary transformation of the polarization of at least one photon of the entangled photon pair is applied, preferably by linear ± 90°.

The first switching condition of the second control means guides the light, preferably the photon, without an additional polarization change through the second control means. No additional polarization change means here, that the second control means in its first switching position introduces no polarization change or can introduce a polarization change in the source in order to generate entangled photon pairs in the first state, whereby the polarization change from the first to the second switching position of the second control means allows the generation of entangled photon pairs in a second or third or fourth state.

In a preferred embodiment, the two or more second conditions of the second control means are the information of the setting of the first control means.

In a preferred embodiment, the second control means adjust the polarization of the signal and/or the idler photon by a unitary transformation of the polarization of the generated entangled photon pair, in order to adjust the state of the generated entangled photon pair.

In a preferred embodiment, in step iv) the second control means is set to its first switching condition or its second switching condition in order to control the state of the generated entangled photon pair, preferably by the change of the polarization of the signal and/or the idler photon.

Polarization modulation means here a change of the polarization of the light guided through the second control means. A polarization modulation by the second control means is a unitary transformation of the polarization of the qubit (photon) without a measurement of the qubit (photon).

In a preferred embodiment, the second control means comprises a polarization modulator in one or two or more WDM-output ports.

In a preferred embodiment, the polarization modulation can be realized by an application of an electric field on the non-linear crystal or waveguide leading to a change of the refractive index of the non-linear crystal or waveguide.

In a preferred embodiment, the phase shift is linear to the applied electric field. In a preferred embodiment, the electric field is in the range of 2 V to 30 V, preferably in the range of 2 V to 10 V for photons in the range of 630 nm up to 1550 nm.

In a preferred embodiment, the switchable second control means has a switching rate up to 50 MHz, preferably up to 100 MHz, more preferably up to 500 MHz.

In a preferred embodiment, the switching rate of the phase shift is up to 10 kHz, preferably up to 1 MHz, more preferably more than 100 MHz.

In a preferred embodiment, the switching of the second control means is chosen randomly, preferably for each signal and/or idler photon of each pair, preferably by a random number generator, more preferably by a quantum random number generator. In a preferred embodiment, the switching of the second control means is in a deterministic alternating order. In a preferred embodiment, the source comprises a random number generator, preferably a quantum random number generator in order to control the second control means.

In a preferred embodiment, each entangled photon pair is generated
- in the first state by the first and second control means in the first switching condition, or
- in the second state by the first control means in the second switching condition, preferably introducing a phase change Δ*φ* in contrast to the first state, and the second control means in the first switching condition, or
- in the third state by the second control means in the second switching condition, preferably introducing a unitary transformation of the polarization of at least one photon of the pair in contrast to the first state, and the first control means in the first switching condition, or
- in the fourth state by the first and second control means in the second switching, preferably introducing a phase change Δ*φ* and a unitary transformation of the polarization of at least one photon of the pair in contrast to the first state.

In the following a non-exclusive example of the generation of polarization entangled photon pairs in different Bell states by the inventive source is described.

In this example the source is configured to generate polarization entangled photon pairs in the state $\left|{Φ}^{+}\right〉 = \frac{1}{\sqrt{2}} \left(\left|H\right〉\left|H\right〉+\left|V\right〉\left|V\right〉\right)$, when the source is in its ground configuration, this means that the first and the second control means are in their first switching conditions, preferably by not changing the phase or the polarization of the photons.

In this non-exclusive example the source comprises a non-linear type 0 or type 1 crystal as Down Conversion (DC) means. By spontaneous parametric down conversion, the pump photon generates a pair of two down converted photons, a signal and an idler photon. The signal and the idler photon have in this example a horizontal linear polarization, in the case of a type 0 non-linear crystal pumped with horizontal linear polarized photons. Due to the Sagnac loop configuration, the signal and idler photons in this source either both have a horizontal linear polarization or both have a vertical linear polarization when measured at the receivers in the H/V bases, which can be described by the state $\left|{Φ}^{+}\right〉 = \frac{1}{\sqrt{2}} \left(\left|H\right〉\left|H\right〉+\left|V\right〉\left|V\right〉\right)$ .

Each Bell state can be transformed into any other Bell state by a unitary transformation on one of the two qubits (photons) by | Φ⁺〉 = (1 ⊗ *σ̂*_{z})| Φ⁻〉 = (1 ⊗ *σ̂ₓ*)| ψ*⁺*〉 *=* (1 ⊗ *σ̂_{y}*) | *ψ⁻*〉.

In the inventive source and method, the first control means controls the phase of the pump photon, preferably by a phase change of Δ*φ = π.* Since the phase of the pump photon is transferred to the photon pair via the non-linear process of spontaneous parametric down conversion (SPDC) polarization entangled photon pairs in the state $\left|{Φ}^{-}\right〉 = \frac{1}{\sqrt{2}} \left(\left|H\right〉\left|H\right〉-\left|V\right〉\left|V\right〉\right)$ are generated by the source with the first control means in the second switching conditions.

In this example the second control means is used to adjust the polarization of the signal or the idler photon. Assuming in this example the second control means arranged in the WDM-output port of the idler photon.

A source with a Sagnac configuration for a $\left|{Φ}^{+}\right〉 = \frac{1}{\sqrt{2}} \left(\left|H\right〉\left|H\right〉+\left|V\right〉\left|V\right〉\right)$ state, and a linear polarization rotation of the idler photon by 90° would lead to a generation of polarization entangled photon pairs in the state $\left|{Ψ}^{+}\right〉 = \frac{1}{\sqrt{2}} \left(\left|H\right〉\left|V\right〉+\left|V\right〉\left|H\right〉\right)$ because of the unitary transformation of the idler photon by the polarization rotation.

In the same way, a source with a Sagnac configuration for a $\left|{Φ}^{-}\right〉 = \frac{1}{\sqrt{2}} \left(\left|H\right〉\left|H\right〉-\left|V\right〉\left|V\right〉\right)$ state, and a linear polarization rotation of the idler photon by 90° would lead to a generation of polarization entangled photon pairs in the state $\left|{Ψ}^{-}\right〉 = \frac{1}{\sqrt{2}} \left(\left|H\right〉\left|V\right〉-\left|V\right〉\left|H\right〉\right)$ because of the unitary transformation of the idler photon by the polarization rotation.

This leads to the inventive source and method with a source in its ground configurated to generate polarization entangled photon pairs in the state $\left|{Φ}^{+}\right〉 = \frac{1}{\sqrt{2}} \left(\left|H\right〉\left|H\right〉+\left|V\right〉\left|V\right〉\right)$ , and the state $\left|{Φ}^{-}\right〉 = \frac{1}{\sqrt{2}} \left(\left|H\right〉\left|H\right〉-\left|V\right〉\left|V\right〉\right)$ by switching of the first control means. The second control means enables the inventive source and method the generation of the states $\left|{Ψ}^{+}\right〉 = \frac{1}{\sqrt{2}} \left(\left|H\right〉\left|V\right〉+\left|V\right〉\left|H\right〉\right)$ and $\left|{Ψ}^{-}\right〉 = \frac{1}{\sqrt{2}} \left(\left|H\right〉\left|V\right〉-\left|V\right〉\left|H\right〉\right)$ originating from the states $\left|{Φ}^{+}\right〉 = \frac{1}{\sqrt{2}} \left(\left|H\right〉\left|H\right〉+\left|V\right〉\left|V\right〉\right)$ and $\left|{Φ}^{-}\right〉 = \frac{1}{\sqrt{2}} \left(\left|H\right〉\left|H\right〉-\left|V\right〉\left|V\right〉\right)$.

In a preferred embodiment, the first control means enables the source to generate the Bell states | Φ⁺〉 and | Φ⁻〉, preferably the source generates polarization entangled photon pairs in the state | Φ⁺〉 and | Φ⁻〉 by the first control means.

In a preferred embodiment, the second control means together with the first control means enables the source to generate all four Bell states | Φ⁺〉, | Φ⁻〉, | Ψ⁺〉 and | Ψ⁻〉, preferably the source generates polarization entangled photon pairs in the states | Φ⁺〉, | Φ⁻〉, | Ψ⁺〉 and | T⁻〉 by the first and the second control means.

In a preferred embodiment, the source comprises a computer, preferably with a microprocessor with a non-volatile memory. In a preferred embodiment, the computer in the source controls the first and second control means and/or the laser.

The Sagnac loop of the inventive source and the inventive method comprises the polarizing beam splitter (PBS), preferably with 4 ports, and the polarization maintaining fiber. The first port of the polarizing beam splitter (PBS) is preferably an input port for the laser beam and the output port for the polarization entangled photon pair. It is also possible that the second port of the polarizing beam splitter (PBS) is the output port for the polarization entangled photon pair. The polarization maintaining fiber is preferably connected to the third and fourth port of the polarizing beam splitter (PBS).

The Sagnac loop build by the polarizing beam splitter (PBS) and by the polarization maintaining fiber is arranged in such a way that one end of the fiber is connected to the third port of the polarizing beam splitter and the second end of the fiber is connected to a fourth port of the polarizing beam splitter, forming a loop.

This configuration forms a clockwise (CW) traveling direction for photons from the third port of the polarizing beam splitter via the fiber and towards the fourth port of the polarizing beam splitter. In addition, a counterclockwise (CCW) traveling direction for photons is formed from the fourth port of the polarizing beam splitter via the fiber towards the third port of the polarizing beam splitter.

Entanglement is received by the possibility to generate photon pairs in the clockwise (CW) and counterclockwise (CCW) direction in the Sagnac loop and the missing knowledge in which pump direction the photon pair was generated by the overlap of both possible traveling directions at the polarizing beam splitter (PBS). Due to the recombination of both possible traveling directions at the polarizing beam splitter (PBS) in the Sagnac loop, the photon pair can be described as an entangled photon pair.

In a preferred embodiment, the Second-Harmonic-Generation (SHG) means is pumped by the pump laser in order to generate pump photons by Second-Harmonic Generation. The pump photons are used to pump the Down-Conversion (DC) means. In a preferred embodiment, the wavelength of the pump laser is in the range of 1260 nm to 1610 nm. In a preferred embodiment, the wavelength of the pump photon is in the range of 630 nm to 805 nm, preferably determined by the wavelength of the pump laser and the poling period of the Second-Harmonic-Generation (SHG) means.

In a preferred embodiment, the Second-Harmonic-Generation (SHG) means comprises two non-linear Second-Harmonic-Generation (SHG) elements, preferably a first Second-Harmonic-Generation (SHG) element and a second Second-Harmonic-Generation (SHG) element. In a preferred embodiment, the first and/or the second Second-Harmonic-Generation (SHG) element are non-linear crystals or waveguides.

In a preferred embodiment, the first control means is arranged in the Sagnac loop in order to control and/or change the phase of the pump photon in the clockwise (CW) and the counterclockwise (CCW) direction. This can be realized by the first control means arranged between the two Second-Harmonic-Generation (SHG) elements.

In a preferred embodiment, the Second-Harmonic-Generation (SHG) element comprises a periodically poled lithium niobate (PPLN) crystal or waveguide.

In a preferred embodiment, the first Second-Harmonic-Generation (SHG) element and the second Second-Harmonic-Generation (SHG) element are connected with the polarizing beam splitter by the polarization maintaining fiber. In a preferred embodiment, the first and the second Second-Harmonic-Generation (SHG) elements are pumped by the laser beam with the same linear polarization. Due to the different polarizations at the third and the fourth output of the polarizing beam splitter (horizontal at one output and vertical at the other output), the linear polarization of the pump beam is rotated between the polarizing beam splitter (PBS) and one of the Second-Harmonic-Generation (SHG) elements, preferably the first or the second Second-Harmonic-Generation (SHG) element. This rotation can be performed by a rotation of the polarization maintaining fiber by 90°, or by a linear polarization rotation between the polarizing beam splitter and the polarization maintaining fiber or by a linear polarization rotation between a first part of the polarization maintaining fiber and a second part of the polarization maintaining fiber, preferably by a waveplate or a polarization controller.

In a preferred embodiment, the first and the second Second-Harmonic-Generation (SHG) element are connected with a polarization maintaining fiber.

In a preferred embodiment, the polarization maintaining fiber between the first and the second Second-Harmonic-Generation (SHG) element suppresses the laser beam of the laser, preferably by scattering or attenuation due to the material or the construction of the polarization maintaining fiber.

In a preferred embodiment, the first control means is located between the first and the second Second-Harmonic-Generation (SHG) element, preferably in the polarization maintaining fiber between the first and the second Second-Harmonic-Generation (SHG) element.

In a preferred embodiment, the Down Conversion (DC) means is pumped by the pump photon in order to generate photon pairs by spontaneous parametric down conversion (SPDC). In a preferred embodiment, the wavelength of the photon pair is in the range of 1260 nm to 1610 nm, preferably determined by the wavelength of the pump photon and the poling period of the Down Conversion (DC) means.

**In** a preferred embodiment, the wavelength of the signal photon is in the range of 1260 nm to 1610 nm. **In** a preferred embodiment, the wavelength of the idler photon is in the range of 1260 nm to 1610 nm.

**In** a preferred embodiment, the signal and idler photons of each entangle photon pair are wavelength degenerated, in order to enable the distribution of the signal and idler photons in the wavelength division multiplexing (WDM) means.

**In** a preferred embodiment, the Down Conversion (DC) means comprises two Down Conversion (DC) elements, preferably a first Down Conversion (DC) element and a second Down Conversion (DC) element. **In** a preferred embodiment, the Down Conversion (DC) element is a non-linear crystal or a waveguide.

**In** a preferred embodiment, the non-linear Down Conversion (DC) element comprises a periodically poled lithium niobate (PPLN) crystal or waveguide.

**In** a preferred embodiment, the non-linear Down Conversion (DC) element is a type 0 or a type I non-linear crystal or waveguide.

**In** a preferred embodiment, the Second-Harmonic-Generation (SHG) element for the clockwise (CW) direction and the Down Conversion (DC) element for the counterclockwise (CCW) direction are one non-linear crystal or one waveguide with two different poling periods, preferably a first poling period for Second-Harmonic-Generation (SHG) and a second poling period for Down Conversion (DC).

In a preferred embodiment, the Second-Harmonic-Generation (SHG) element for the counterclockwise (CCW) direction and the Down Conversion (DC) element for the clockwise (CW) direction are one non-linear crystal or one waveguide with two different poling periods, preferably a first poling period for Second-Harmonic-Generation (SHG) and a second poling period for Down Conversion (DC).

In a preferred embodiment, to generate photon pairs in the clockwise (CW) and the counterclockwise (CCW) direction the components are arranged in the following order beginning on the third port of the polarizing beam splitter (PBS) in the clockwise (CW) direction; the polarization maintaining fiber, the second Down Conversion (DC) element, the first Second-Harmonic-Generation (SHG) element, the polarization maintaining fiber, the first control means, the second Second-Harmonic-Generation (SHG) element, the first Down Conversion (DC) element, the polarization maintaining fiber. Whereby the first Second-Harmonic-Generation (SHG) element and the first Down Conversion (DC) element are used for the generation of photon pairs in the clockwise (CW) direction and the second Second-Harmonic-Generation (SHG) element and the second Down Conversion (DC) element are used for the generation of photon pairs in the counterclockwise (CCW) direction.

In a preferred embodiment, the first and second Second-Harmonic-Generation (SHG) elements are arranged symmetrically in the Sagnac loop, preferably with the same distance to the polarizing beam splitter (PBS) and/or to the first control means. In a preferred embodiment, the first and second Down Conversion (DC) element are arranged symmetrically in the Sagnac loop, preferably with the same distance to the polarizing beam splitter (PBS) and/or to the first control means.

In a preferred embodiment, the first Second-Harmonic-Generation (SHG) element and the second Down Conversion (DC) element are arranged one after each other, preferably are one non-linear crystal or one waveguide with a first poling for second harmonic generation and a second poling for down conversion. In a preferred embodiment, the second Second-Harmonic-Generation (SHG) element and the first Down Conversion (DC) element are arranged one after each other, preferably are one non-linear crystal or one waveguide with a first poling for second harmonic generation and a second poling for Down Conversion (DC).

In a preferred embodiment, the source comprises the Second-Harmonic-Generation (SHG) means and the Down Conversion (DC) means, whereby the Second-Harmonic-Generation (SHG) means for the clockwise (CW) direction is the Down Conversion (DC) means for the counterclockwise (CCW) direction, and the Second-Harmonic-Generation (SHG) means for the counterclockwise (CCW) direction is the Down Conversion (DC) means for the clockwise (CW) direction. In this embodiment two non-linear elements are arranged in the source, the Second-Harmonic-Generation (SHG) means and the Down Conversion (DC) means, whereby depending on the pump direction in the source the first non-linear element acts as the Second-Harmonic-Generation (SHG) means and the second non-linear element acts as the Down Conversion (DC) means. This can be realized for example by only one poling period in the non-linear element when the second harmonic generation and the down conversion involve the same wavelengths. In this embodiment in dependence on the arrangement on the first or second place due to the pump direction the two non-linear elements act as the first or second Second-Harmonic-Generation (SHG) element and the first or second Down Conversion (DC) element as described in one of the examples above. The two non-linear elements can be a non-linear crystal or a waveguide. In a preferred embodiment, the two non-linear elements comprise a periodically poled lithium niobate (PPLN) crystal or waveguide. In a preferred embodiment, the two non-linear elements are a type 0 or a type I non-linear crystal or waveguide.

The wavelength division multiplexing (WDM) means in the source separates the signal and idler photon of each pair depending on the wavelength of the signal and idler photon. The separated photons are then transmitted via multiple channels of the network to the first and second receiver. This separation of multiple signals into multiple channels is also called de-multiplexing.

In a preferred embodiment, the wavelength division multiplexing (WDM) means comprises two WDM-output ports, the first WDM-output port for the signal photon of each polarization entangled photon pair and the second WDM-output port for the idler photon of each polarization entangled photon pair.

In a preferred embodiment, the wavelength division multiplexing (WDM) means comprises more than two WDM-output ports. The source can transmit entangled photon pairs to more than two receivers by the generation of wavelength dependent entangled photon pairs.

In a preferred embodiment, the source generates wavelength degenerated photon pairs in order to enable the distribution of the photon pairs to more than two receivers by the separation of the photon pairs in the wavelength division multiplexing (WDM) means. For each receiver pair (two receivers, four receivers, six receivers and so on) photon pairs with individual wavelengths are generated. In addition, the signal and idler photons of the wavelength degenerated photon pairs are wavelength degenerated in order to send the signal and idler photon to the first and the second receiver of each receiver pair.

The distribution of the signal and idler photons of each entangled photon pair is based on the wavelength of the photons generated in the Sagnac loop. For this distribution the pump laser, the Second-Harmonic-Generation (SHG) means, and/or the Down Conversion (DC) means are coordinated in such a way to generate polarization entangled photon pairs with a signal and idler photon with different wavelength. The coordination can be achieved by the adjustment of the pump laser wavelength and the poling period and/or the temperature of the Second-Harmonic-Generation (SHG) means and/or the Down Conversion (DC) means.

In a preferred embodiment, the wavelength division multiplexing (WDM) means is a dichroic mirror, or a grating, or any other wavelength multiplexing means.

In a preferred embodiment, the wavelength division multiplexing (WDM) means comprises two or more WDM-output ports, whereby each WDM-output port is connected with a receiver.

In a preferred embodiment, the WDM-output ports are connected with two or more receivers via the network. In a preferred embodiment, the network comprises two or more fiber or free space channels connecting the wavelength division multiplexing (WDM) means with the receivers.

In a preferred embodiment, the wavelength division multiplexing (WDM) means distributes the signal and idler photons of the generated entangled photon pairs between two or more receivers. Preferably, for the distribution of entangled photon pairs between more than two receivers, entangled photon pairs of different wavelengths are generated in the source.

In a preferred embodiment, the circulator is a non-reciprocating, one directional, three-port means.

In a preferred embodiment, the circulator comprises three ports. The laser beam applied to the first port is transmitted to the second port, which is connected to the Sagnac loop. The entangled photon pair applied to the second port is transmitted to the third port, which is connected to the wavelength division multiplexing (WDM) means.

In a preferred embodiment, the circulator is a fiber circulator, preferably a polarization maintaining fiber circulator.

The laser generates a laser beam in order to generate the pump photon by second harmonic generation in the Second-Harmonic-Generation (SHG) means.

In a preferred embodiment, the laser generates a pulsed laser beam, preferably with a repetition rate of up to 10 kHz, preferably up to 1 MHz, more preferably more than 100 MHz. In a preferred embodiment, the laser generates a pulsed laser beam with a pulse length in the range of 50 ns to 50 ps, preferably in the range of 10 ns to 100 ps, more preferably in the range of 5 ns to 500 ps.

In a preferred embodiment, a Laser-phase modulator is arranged between the Laser and the Sagnac loop, preferably between the laser and the circulator. In a preferred embodiment, the Laser-phase modulator is a fiber phase modulator or a free space phase modulator. With the Laser-phase modulator the generated state of the ground configuration of the source can be adjusted. The ground configuration is the state generated in the source by the first and second control means in the first switching condition.

In a preferred embodiment, a polarizer, and/or a polarization modulator, and/or a Faraday rotator is arranged between the laser and the circulator. With the polarizer, and/or the polarization modulator, and/or the Faraday rotator the polarization of the pump beam can be adjusted, preferably in order to generate a full entangled Bell state.

In a preferred embodiment, the pump laser and the circulator are connected by fiber optics, and/or the circulator and the Sagnac loop are connected by fiber optics, and/or the circulator and the wavelength division multiplexing means are connected by fiber optics.

The receivers obtain the signal and idler photons of the entangled photon pairs.

In a preferred embodiment, the measurement means comprises a polarizer, and/or a polarizing beam splitter, and/or an electro-optical modulator, and/or an acousto-optic modulator, and/or one or more waveplates in order to set the measurement base, and the measurement means comprises a detection means in order to detect the photon.

In a preferred embodiment, the measured base is chosen randomly, preferably for each signal and/or idler photon, preferably chosen randomly by a beam splitter or chosen randomly by a random number generator, more preferably by a quantum random number generator.

In a preferred embodiment, in step v) the measurement of the signal and idler photon of the entangled photon pair by the first and second receiver is conducted in a random polarization base. Preferably, the receivers measure the polarization of the photon in one out of two or three calibrated polarization bases.

In a preferred embodiment, the detection means comprises one or more detectors, in order to detect the signal and/or idler photons of the entangled photon pair.

In a preferred embodiment, the one or more detectors are single photon detectors, preferably germanium (Ge), or silicon (Si), or germanium on silicon (Ge on Si) single-photon avalanche diode (SPAD), or Indium gallium arsenide (InGaAs/Inp) single photon detectors, or semiconductor-based single-photon avalanche diode (SPAD), or superconducting nanowire single-photon detector (SNSPD), or Silicon Avalanche Photodiodes (Si APD).

In a preferred embodiment, the measurement means comprises a bell measurement setup for quantum key distribution (QKD) or for quantum teleportation or as a quantum repeater. The bell measurement setup comprises a measurement means for at least two non-orthogonal polarization states.

In a preferred embodiment, the logic comprises a computer with a microprocessor with a non-volatile memory, wherein the non-volatile memory comprises an executable program in order to provide a method according to one of the methods described above.

In a preferred embodiment, the transmission of the setting of the first and/or second control means and/or the information of the state of the generated photon pair are transmitted in the quantum channel and/or a classical channel. In a preferred embodiment, the classical channel is the internet, or a radio transmission, or any other classical information transmission means.

In a preferred embodiment, the logic of the first and/or second receiver communicates with the source and the second and/or first receiver in order to generate a key by a quantum key generation protocol.

In a preferred embodiment, the communication of the polarization entangled photons, also called the raw key exchange, takes place via a quantum channel, preferably a fiber and/or a free-space channel, and the remaining communication takes place via the quantum and/or a classical channel. The remaining communication comprises for example the information for key sifting, and/or error correction, and/or privacy amplification, and/or authentication and the communication of the state of the generated entangled photon pair from the source to the receivers.

In a preferred embodiment, the key sifting is performed through the classical channel and/or the quantum channel. An advantage of quantum key distribution is that the communication after the raw key transmission can take place via a classical channel because this information cannot be used by a third party to gain information on the key.

In a preferred embodiment, the bases of the measurement of the first and second receivers are out of a common polarization reference frame between the first and second receivers. In a preferred embodiment, the measurements of the first and second receivers are chosen randomly out of at least two non-orthogonal measurement bases.

In a preferred embodiment, the entangled photon pairs are used for a Quantum Key distribution (QKD), preferably to generate a key in at least two receivers.

The object is further achieved by a protocol for Quantum Key Distribution (QKD) with polarization entangled photon pairs, preferably the protocol is used in one of the embodiments of the method as described here, comprising a source, preferably according to one of the embodiments as described here, a network, a first and second receiver, preferably according to one of the embodiments as described here,
a) generation of a polarization entangled photon pair by the source in a state, preferably according to the steps i), ii) and iii) of the method, whereby the state is preferably one out of the four Bell states,
b) transmission of the signal and idler photon of the entangled photon pair from the source via the network to the first and second receiver, preferably according to the step iv) of the method,
c) measurement of the signal and idler photon by the first receiver in a first measurement base and by the second receiver in a second measurement base, whereby the state of the entangled photon pair is unknown to the first and second receiver, preferably according to the step v) of the method,
d) repetition of step a) to c), preferably until enough photons are detected by the first and second receiver to generate a key,
e) key sifting by comparison of the measurement bases of all or a part of the detected signal and idler photons of the entangled photon pairs and generation of a sifted key by photon pairs measured in the same base,
f) transmission of the setting of the first and/or second control means or information of the state of each entangled photon pair in step a) to the first and/or second receiver,
g) key generation by flip of bits of the sifted key according to the state of the entangled photon pair by the first and/or second receiver. According to the invention the steps e), f) and g) are additional steps of the quantum key distribution protocol in step vii) of the method.

In a preferred embodiment of the protocol, step f) can be realized at any time after step c) and before step g).

The above and other aspects, features and advantages of the present invention will become more apparent from the following detailed description when taken in conjunction with the accompanying drawings.

### Brief Description of the Drawings:

- Fig. 1:: schematic diagram of the inventive source;
- Fig. 2:: schematic diagram of the inventive system with two receivers;
- Fig. 3:: schematic diagram of the inventive system with six receivers;
- Fig. 4: schematic diagram of the steps of the inventive methods.

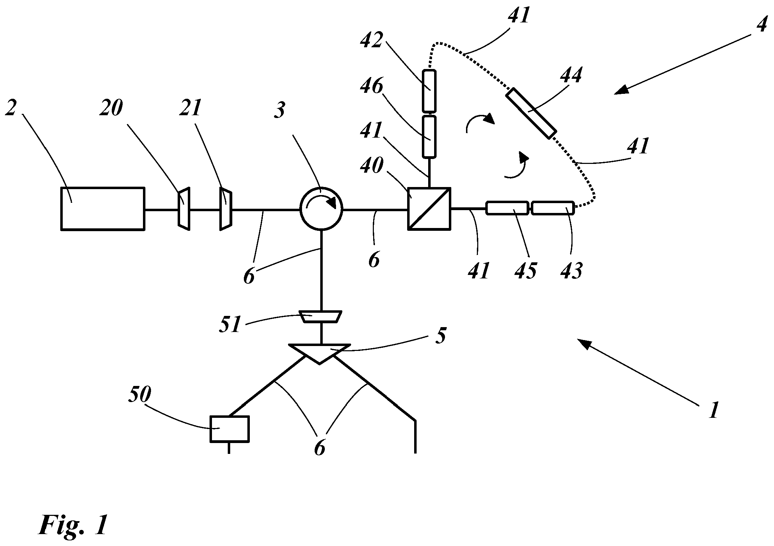

Fig. 1 shows the inventive source 1 for the generation of polarization entangled photon pairs comprising a laser 2, a circulator 3, a fiber base Sagnac loop 4 and a wavelength division multiplexing (WDM) means 5.

The laser 2 in the example of Fig.1 generates a pulsed laser beam. The wavelength of the pump laser is in the range of 1260 nm to 1610 nm. To set the ground state of the source 1, a laser-phase modulator 20 and a polarizer 21 are arranged in the laser beam path in order to adjust the phase and the polarization of the laser beam. The laser-phase modulator 20 and the polarizer 21 could be in fiber components or by free space components together with a fiber coupler between the laser 2 and the circulator 3. The ground state of the source 1 is in this example the state of the generated entangled photon pairs with each switchable component in its first state.

In the example of Fig. 1 the circulator 3 is a fiber-based circulator 3 with three ports. The laser beam from the laser 2 applied to the first port (left) is transmitted to the second port (right), which is connected via a fiber 6 with the Sagnac loop 4. The entangled photon pair from the Sagnac loop 4 applied to the second port (right) is transmitted to the third port (bottom), which is connected via a fiber 6 to the wavelength division multiplexing (WDM) means 5.

The Sagnac loop 4 in Fig. 1 comprises a polarizing beam splitter (PBS) 40, a polarization maintaining fiber 41, a first Second-Harmonic-Generation (SHG) element 42 and a second Second-Harmonic-Generation (SHG) element 43, a first control means 44, a first down conversion (DC) element 45 and a second down conversion (DC) element 46.

In the first and second Second-Harmonic-Generation (SHG) element 42 and 43 pump photons are generated by second harmonic generation by the laser beam and the first and second Second-Harmonic-Generation (SHG) element 42 and 43.

In the first and second down conversion (DC) element 45 and 46 photon pairs are generated by spontaneous parametric down conversion (SPDC) by the pump photon and the first and second down conversion (DC) element 45 and 46.

The first Second-Harmonic-Generation (SHG) element 42 and the second Second-Harmonic-Generation (SHG) element 43 build in the example of Fig. 1 together a Second-Harmonic-Generation (SHG) means. The first down conversion (DC) element 45 and the second down conversion (DC) element 46 build in the example of Fig. 1 together a down conversion (DC) means.

The Sagnac loop 4 in Fig. 1 comprises the polarizing beam splitter (PBS) 40 with four ports. The first port (left) of the polarizing beam splitter (PBS) 40 is an input port for the laser beam and the output port for the polarization entangled photon pairs. The polarization maintaining fiber 41 is connected to the second (top) and third (right) port of the polarizing beam splitter (PBS) 40. The fourth port (bottom) is not used in the example of Fig. 1.

The loop of the Sagnac loop 4 is formed by the polarizing beam splitter (PBS) 40 and the polarization maintaining fiber 41 in such a way to enable a clockwise (CW) and a counterclockwise (CCW) traveling direction of the photons through the loop denoted by the two arrows in Fig. 1 in the Sagnac loop 4.

The polarization maintaining fiber 41 between the polarizing beam splitter (PBS) and the first and the second Second-Harmonic-Generation (SHG) element 42 and 43 is optimized for the wavelength of the pump laser.

To generate photon pairs in the clockwise (CW) and the counterclockwise (CCW) direction the components are arranged in Fig. 1 in the following order beginning on the second (top) port of the polarizing beam splitter (PBS) 40 in the clockwise (CW) direction; the polarization maintaining fiber 41 optimized for the pump laser wavelength and the down conversion wavelength, the second Down Conversion (DC) element 46, the first Second-Harmonic-Generation (SHG) element 42, the polarization maintaining fiber 41 optimized for the pump photon wavelength, the first control means 44, the second Second-Harmonic-Generation (SHG) element 43, the first Down Conversion (DC) element 45, the polarization maintaining fiber 41 optimized for the pump laser wavelength and the down conversion wavelength.

Due to the use of the polarizing beam splitter (PBS) 40 the laser beam on the second (top) and third (right) output port of the polarizing beam splitter (PBS) 40 has different polarizations, horizontal at one output and vertical at the other output. In order to pump the first and second Second-Harmonic-Generation (SHG) element 42 and 43 with the same polarization a polarization rotation is performed in Fig. 1 by a rotation of the polarization maintaining fiber by 90°. The rotation can be realized in the polarization maintaining fiber 41 either in front of the first Second-Harmonic-Generation (SHG) element 42 or the second Second-Harmonic-Generation (SHG) element 43, depending on the type of the first and second Second-Harmonic-Generation (SHG) element 42 and 43.

In the example of Fig. 1 the first control means 44 is arranged between the first and second Second-Harmonic-Generation (SHG) element 42 and 43. The first control means 44 is connected with a polarization maintaining fiber 41 optimized for the pump photon with a wavelength in the range of 630 nm to 805 nm. The pump laser with a wavelength in the range of 1260 nm to 1610 nm is suppressed by the polarization maintaining fiber 41 between the first and second Second-Harmonic-Generation (SHG) element 42 and 43.

The first control means 44 is in the example of Fig. 1 a fast-switching fiber-based phase modulator waveguide. The phase of the pump photon generated by the first or second Second-Harmonic-Generation (SHG) element 42 or 43 is controlled by the first control means 44 in order to change the state of the generated photon pair.

In the example of Fig. 1 the first control means 44 has two switching positions in order to introduce a phase change of Δ*φ = π.* The first switching position introduces no phase change on the pump photon. The second switching position introduces a phase change of Δ*φ = π* on the pump photon.

In the example of Fig. 1 for the generation of photon pairs in the clockwise (CW) direction the first Second-Harmonic-Generation (SHG) element 42 is pumped by the pump laser and generates a pump photon. Then, the phase of the pump photon can be changed by the first control means 44. The pump photon generates with the first Down Conversion (DC) element 45 a photon pair. The phase of the pump photon is transferred to the photon pair via the non-linear process of spontaneous parametric down conversion (SPDC) in the first Down Conversion (DC) element 45.

In the example of Fig. 1 for the generation of photon pairs in the counterclockwise (CCW) direction the second Second-Harmonic-Generation (SHG) element 43 is pumped by the pump laser and generates a pump photon. Then, the phase of the pump photon can be changed by the first control means 44. The pump photon generates with the second Down Conversion (DC) element 46 a photon pair. The phase of the pump photon is transferred to the photon pair via the non-linear process of spontaneous parametric down conversion (SPDC) in the second Down Conversion (DC) element 46.

Entanglement is received by the possibility to generate photon pairs in the clockwise (CW) and counterclockwise (CCW) direction in the Sagnac loop and the missing knowledge in which pump direction the photon pair was generated by the overlap of both possible traveling directions at the polarizing beam splitter (PBS).

Due to the recombination of both possible traveling directions at the polarizing beam splitter (PBS) in the Sagnac loop, the photon pair can be described as an entangled photon pair.

As described above, the entangled photon pair from the Sagnac loop 4 applied to the second port (right) of the circulator 3 is transmitted to the third port (bottom) of the circulator 3, which is connected via a fiber 6 to the wavelength division multiplexing (WDM) means 5.

The wavelength division multiplexing (WDM) means 5 in the source 1 separates the signal and idler photon of each pair depending on the wavelength of the signal and idler photon. In the example of Fig. 1 with only two output ports of the wavelength division multiplexing (WDM) means 5 the wavelength division multiplexing (WDM) means 5 can be a dichroic mirror or a grating.

The signal and idler photon of each pair are transmitted via the fibers 6 to the receivers. In the example of Fig. 1 behind one output port of the wavelength division multiplexing (WDM) means 5 a second control means 50 is arranged.

The second control means 50 is in the example of Fig. 1 a fast-switching fiber-based polarization modulator waveguide. The second control means 50 applies a unitary transformation of the polarization of the photon of the entangled photon pair in order to change the state of the generated photon pair.

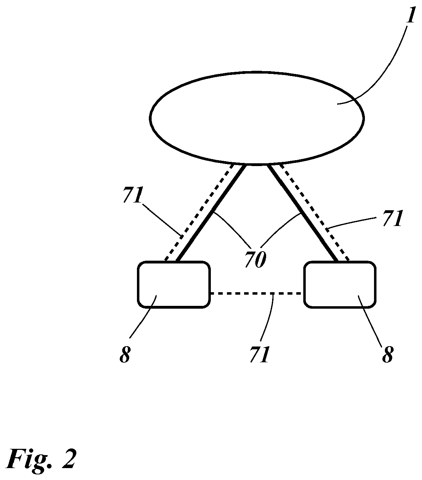

Fig. 2 shows the inventive system with the inventive source 1, a network 7 and two receiver 8. The source 1 is connected via a quantum channel 70 with the first and the second receiver 8 in order to transmit the signal and idler photons of the entangled photon pairs generated in the source 1 to the receivers 8. In addition, the source 1 and the receivers 8 are connected via classical channel 71 in order to allow additional communication for Quantum Key Generation (QKD), for example for key sifting. The information of the state of each generated entangled photon pair, or the setting of the first and second control means 44 and 50 can be transmitted via the quantum channels 70 or the classical channels 71 to one or both receivers 8.

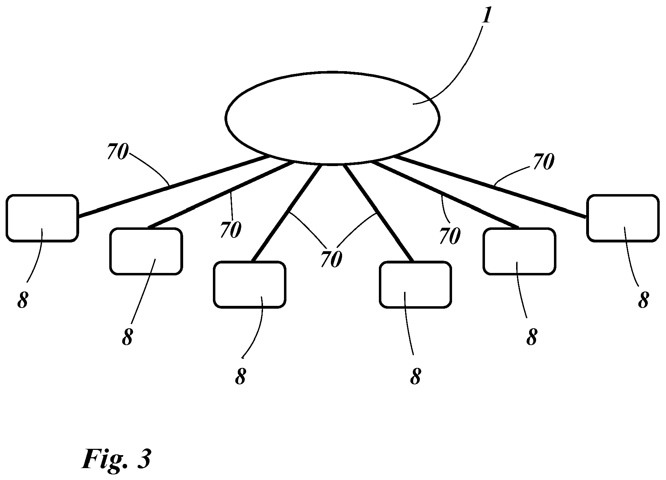

Fig. 3 shows the inventive system with a multitude of receivers 8. For simpler representation only the quantum channels 70 are shown in Fig. 3. Nevertheless, also classical channel 71 can exist between the source 1 and the receivers 8, as shown in Fig. 2. To send entangled photon pairs to different receivers 8, the source 1 in the example of Fig. 3 generates wavelength degenerated photon pairs within three different wavelengths, leading to signal and idler photons in six different wavelengths.

The wavelength division multiplexing (WDM) means 5 in Fig. 3 has six output ports, separating the six photons according to their wavelengths into one of the quantum channels 70. In the example of Fig. 3 by the generation of entangled photon pairs in different wavelengths the source 1 can generate photon pairs for a multitude of receivers 8 for a key generation.

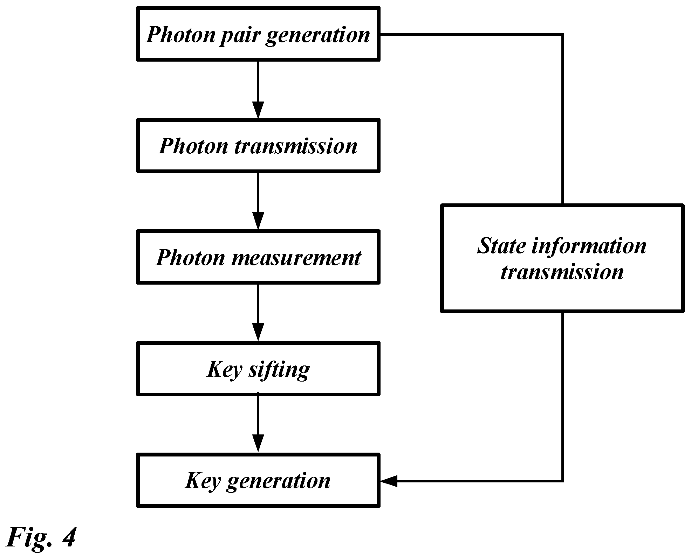

Fig. 4 shows a diagram of steps of the inventive method. In the source 1 entangled photon pairs are generated. The state of the entangled photon pair is chosen by the source out of four possible states. The four possible states can be set by the first and the second control means 44 and 50.

The photons are transmitted to the receivers 8 and measured by the receivers 8 in a random base. The receivers 8 can measure the polarization of the photon in one out of two or three calibrated bases.

In the next step the receivers 8 follow a quantum key generation protocol in order to generate a sifted key. This means, that for example the receivers 8 exchange the measurement base of each measured photon, but keep the outcome of the measurement secret. Key sifting means for example, that the sifted key comprises only photons measured in the same base by the two receivers 8.

For the key generation in the inventive method an additional step is necessary. The source has to transmit the information of the state or the first and second control means 44 and 50 to the receivers 8. By the generation of the entangled photon pairs in different states, the outcome of the measurement of the photons has to be matched with the state in order to allow the generation of the same key at the two receivers 8. For that, for example one receiver has to change the bits of the sifted key according to the measured base and the state.

### Reference signs:

- 1: source
- 2: laser
- 3: circulator
- 4: Sagnac loop
- 5: wavelength division multiplexing (WDM) means
- 6: fiber
- 7: network
- 8: receiver

- 20: laser-phase modulator
- 21: polarizer

- 40: polarizing beam splitter (PBS)
- 41: polarization maintaining fiber
- 42: first Second-Harmonic-Generation (SHG) element
- 43: second Second-Harmonic-Generation (SHG) element
- 44: first control means
- 45: first down conversion (DC) element
- 46: second down conversion (DC) element

- 50: second control means
- 51: filter

- 70: quantum channel
- 71: classical channel

## Claims

1. Source of polarization entangled photon pairs for Quantum Key Distribution (QKD), preferably the polarization entangled photon pairs are used for the generation of a key by Quantum Key Distribution (QKD),
comprising a laser (2), a circulator (3), a fiber based Sagnac loop (4) and a wavelength division multiplexing (WDM) means (5),
whereby the laser (2) generates a laser beam and the laser beam is guided through the circulator (3) to the fiber based Sagnac loop (4), and
whereby the fiber based Sagnac loop (4) comprises a polarizing beam splitter (PBS) and a polarization maintaining fiber (41), a Second-Harmonic-Generation (SHG) means, and a down conversion (DC) means, whereby the Second-Harmonic-Generation (SHG) means is pumped by the laser beam and generates pump photons and the down conversion (DC) means is pumped by the pump photons and generates photon pairs, and whereby the polarizing beam splitter (PBS), the polarization maintaining fiber (41), the Second-Harmonic-Generation (SHG) means, and the down conversion (DC) means are arranged in a Sagnac configuration in order to generate polarization entangled photon pairs, and
whereby the polarization entangled photon pairs are guided from the fiber based Sagnac loop (4) through the circulator (3) to the wavelength division multiplexing (WDM) means (5), and
whereby the wavelength division multiplexing (WDM) means (5) comprises two or more WDM-output ports,
**characterized in that**
the source (1) comprises a first control means (44) arranged in the fiber based Sagnac loop (4) and a second control means (50) arranged behind one or more WDM-output ports,
the first (44) and/or second control means (50) control the state of the polarization entangled photon pairs, and
the first control means (44) comprises a phase modulator and is capable to switch between at least a first and a second switching condition of the first control means (44) and the second control means (50) comprises a polarization modulator and is capable to switch between at least a first and a second switching condition of the second control means (50).

2. Source according to claim 1,
**characterized in that**
the source (1) generates entangled photon pairs in at least four different states, preferably four full entangled state.

3. Source according to one of the claims 1 or 2,
**characterized in that**
the switching rate of the first and/or second control means (44, 50) is up to 10 kHz, preferably up to 1 MHz, more preferably more than 100 MHz.

4. Source according to one of the claims 1 to 3,
**characterized in that**
the phase modulator is an electro-optic-modulator (EOM) or an acousto-optic-modulator (AOM) with a non-linear crystal or waveguide.

5. Source according to one of the claims 1 to 4,
**characterized in that**
the first control means (44) applies a phase change of 0 < Δ*φ* < 2*π* on the state, preferably by switching between the first and second switching condition of the first control means (44).

6. Source according to one of the claims 1 to 5,
**characterized in that**
the polarization modulator is an electro-optic-modulator (EOM) or an acousto-optic-modulator (AOM) with a non-linear crystal or waveguide or a fast-switching waveplate.

7. Source according to one of the claims 1 to 6,
**characterized in that**
the second control means (50) applies a unitary transformation of the polarization of at least one photon of the entangled photon pair.

8. Source according to one of the claims 1 to 7,
**characterized in that**
the Second-Harmonic-Generation (SHG) means comprises two non-linear Second-Harmonic-Generation (SHG) elements (42, 43), preferably a first Second-Harmonic-Generation (SHG) element (42) and a second Second-Harmonic-Generation (SHG) element (43), and/or
the Down Conversion (DC) means comprises two Down Conversion (DC) elements (45, 46), preferably a first Down Conversion (DC) element (45) and a second Down Conversion (DC) element (46).

9. Source according to the claim 8,
**characterized in that**
the first control means (44) is located between the first (42) and the second Second-Harmonic-Generation (SHG) element (43), preferably in the polarization maintaining fiber (41) between the first (42) and the second Second-Harmonic-Generation (SHG) element (43).

10. Source according to one of the claims 1 to 9,
**characterized in that**
the laser (2) generates a pulsed laser beam, preferably with a repetition rate of up to 10 kHz, preferably up to 1 MHz, more preferably more than 100 MHz.

11. System for Quantum Key Distribution (QKD), comprising a source (1) according to one of the claims 1 to 10, a network (7), and at least a first and a second receiver (8),
whereby each entangled photon pair comprises a signal photon and an idler photon, and
whereby the network (7) comprises at least a first quantum channel (70) and a second quantum channel (70), whereby the first quantum channel (70) is arranged between the source (1), preferably between the first WDM-output port of the source (1), and the first receiver (8) enabling the transmission of signal photons from the source (1) to the first receiver (8), and the second quantum channel (70) is arranged between the source (1), preferably between the second WDM-output port of the source (1), and the second receiver (8) enabling the transmission of idler photons from the source (1) to the second receiver (8), and
the receivers (8) comprise each a measurement means and a logic,
**characterized in that**
the source (1) transmits the setting of the first and/or second control means (44, 50) or information of the state of the generated photon pair to the first and/or second receiver (8) in order to enable the first and second receiver (8) to generate a key by Quantum Key Distribution (QKD).

12. Method for the generation of polarization entangled photon pairs for Quantum Key Distribution (QKD), preferably the polarization entangled photon pairs are used for the generation of a key between two receivers (8) by Quantum Key Distribution (QKD),
comprising a source (1) with a laser (2), a circulator (3), a fiber based Sagnac loop (4) with a Second-Harmonic-Generation (SHG) means and a Down-Conversion (DC) means, a wavelength division multiplexing (WDM) means (5), a first control means (44) and a second control means (55), and comprising a network (7) and at least a first and a second receiver (8), wherein the first control means comprises a phase modulator and is capable to switch between at least a first and a second switching condition of the first control means, and the second control means comprises a polarization modulator and is capable to switch between at least a first and a second switching condition of the second control means,
the method comprising the steps
i) generation of a laser beam by the laser (2) and guidance of the laser beam to the Sagnac loop (4), preferably guidance through the circulator (3) to the Sagnac loop (4),
ii) generation of an entangled photon pair in the fiber based Sagnac loop (4) by
- generation of a pump photon by second harmonic generation by the laser beam and the Second-Harmonic-Generation (SHG) means, and
- generation of a photon pair by spontaneous parametric down conversion (SPDC) by the pump photon and the Down-Conversion (DC) means,
iii) guidance of the entangled photon pair from the fiber based Sagnac loop (4) to the wavelength division multiplexing (WDM) means (5), preferably guidance through the circulator (3) to the wavelength division multiplexing (WDM) means (5),
iv) transmission of the signal and idler photon of the entangled photon pair to the first and second receiver (8) by the wavelength division multiplexing (WDM) and the network (7),
v) polarization measurement of the signal and idler photon of the entangled photon pair by the first and second receiver (8),
vi) repetition of the steps i) to v), preferably until enough photons are detected by the first and second receiver (8) to generate a key by Quantum Key Distribution (QKD),
vii) generation of a key, preferably by additional steps of a quantum key distribution protocol,
**characterized in that**
the state of each generated entangled photon pair is controlled by the first control means (44) in step ii) and the second control means (50) in step iv), and
in order to enable the first and second receiver (8) to generate a key in step vii) the source (1) transmits the setting of the first and second control means (44, 50) from step ii) and iv) or information of the state of the generated photon pair to the first and/or the second receiver (8).

13. Method according to the claim 12,
**characterized in that**
for the key generation in step vii) the setting of the first and/or second control means (44, 50) or the information of the state of the entangled photon pair is used by one or more receivers (8) in order to generate the same key at the first and second receiver (8).

14. Method according to one of the claims 12 or 13,
**characterized in that**
for the key generation in step vii) in order to generate the same key at the first and second receiver (8) bit flip of the measurement outcome depending on the measurement base and/or the setting of the first and/or second control means (44, 50) or the information of the state of the entangled photon pair is realized by the first and/or second receiver (8).

## Patentansprüche

1. Quelle für polarisationsverschränkte Photonenpaare zur Quantenschlüsselverteilung (QKD), wobei die polarisationsverschränkten Photonenpaare vorzugsweise zur Erzeugung eines Schlüssels mittels Quantenschlüsselverteilung (QKD) verwendet werden,
umfassend einen Laser (2), einen Zirkulator (3), einen faserbasierten Sagnac-Loop (4) und ein Mittel zum Wellenlängenmultiplexen (WDM) (5),
wobei der Laser (2) einen Laserstrahl erzeugt und der Laserstrahl durch den Zirkulator (3) zu dem faserbasierten Sagnac-Loop (4) geleitet wird, und wobei der faserbasierte Sagnac-Loop (4) einen polarisierenden Strahlteiler (PBS) und eine polarisationserhaltende Faser (41) umfasst, ein Mittel zur Frequenzverdopplung (SHG) und ein Mittel zur Abwärtskonversion (DC), wobei das Mittel zur Frequenzverdopplung (SHG) durch den Laserstrahl gepumpt wird und Pump-Photonen erzeugt und das Mittel zur Abwärtskonversion (DC) durch die Pump-Photonen gepumpt wird und Photonenpaare erzeugt, und
wobei der polarisierende Strahlteiler (PBS), die polarisationserhaltende Faser (41), das Mittel zur Frequenzverdopplung (SHG) und das Mittel zur Abwärtskonversion (DC) in einer Sagnac-Konfiguration angeordnet sind, um polarisationsverschränkte Photonenpaare zu erzeugen, und
wobei die polarisationsverschränkten Photonenpaare von dem faserbasierten Sagnac-Loop (4) durch den Zirkulator (3) zu dem Mittel zum Wellenlängenmultiplexen (WDM) (5) geleitet werden, und
wobei das Mittel zum Wellenlängenmultiplexen (WDM) (5) zwei oder mehrere WDM-Ausgangsanschlüsse umfasst,
**dadurch gekennzeichnet, dass**
die Quelle (1) eine erste Steuervorrichtung (44), die in dem faserbasierten Sagnac-Loop (4) angeordnet ist, und eine zweite Steuervorrichtung (50), die hinter einem oder mehreren WDM-Ausgangsanschlüssen angeordnet ist, umfasst,
die erste (44) und/oder zweite Steuervorrichtung (50) den Zustand der polarisationsverschränkten Photonenpaare steuern, und
die erste Steuervorrichtung (44) einen Phasenmodulator umfasst und dazu geeignet ist, zwischen mindestens einem ersten und einem zweiten Schaltzustand der ersten Steuervorrichtung (44) umzuschalten, und die zweite Steuervorrichtung (50) einen Polarisationsmodulator umfasst und dazu geeignet ist, zwischen mindestens einem ersten und einem zweiten Schaltzustand der zweiten Steuervorrichtung (50) umzuschalten.

2. Quelle nach Anspruch 1,
**dadurch gekennzeichnet, dass**
die Quelle (1) verschränkte Photonenpaare in mindestens vier verschiedenen Zuständen, vorzugsweise in vier vollständig verschränkten Zuständen, erzeugt.

3. Quelle nach einem der Ansprüche 1 oder 2,
**dadurch gekennzeichnet, dass**
die Schaltfrequenz der ersten und/oder zweiten Steuervorrichtung (44, 50) bis zu 10 kHz, vorzugsweise bis zu 1 MHz, noch bevorzugter mehr als 100 MHz beträgt.

4. Quelle nach einem der Ansprüche 1 bis 3,
**dadurch gekennzeichnet, dass**
der Phasenmodulator ein elektro-optischer Modulator (EOM) oder ein akusto-optischer Modulator (AOM) mit einem nichtlinearen Kristall oder Wellenleiter ist.

5. Quelle nach einem der Ansprüche 1 bis 4,
**dadurch gekennzeichnet, dass**
die erste Steuervorrichtung (44) eine Phasenänderung von 0 < Δ*φ* < 2*π* auf den Zustand ausübt, vorzugsweise durch Schalten zwischen dem ersten und dem zweiten Schaltzustand der ersten Steuervorrichtung (44).

6. Quelle nach einem der Ansprüche 1 bis 5,
**dadurch gekennzeichnet, dass**
der Polarisationsmodulator ein elektro-optischer Modulator (EOM) oder ein akusto-optischer Modulator (AOM) mit einem nichtlinearen Kristall oder Wellenleiter oder einer schnell schaltenden Wellenplatte ist.

7. Quelle nach einem der Ansprüche 1 bis 6,
**dadurch gekennzeichnet, dass**
die zweite Steuervorrichtung (50) eine unitäre Transformation der Polarisation mindestens eines Photons des verschränkten Photonenpaares bewirkt.

8. Quelle nach einem der Ansprüche 1 bis 7,
**dadurch gekennzeichnet, dass**
das Mittel zur Frequenzverdopplung (SHG) zwei nichtlineare Elemente zur Frequenzverdopplung (SHG) (42, 43) umfasst, vorzugsweise ein erstes Element zur Frequenzverdopplung (SHG) (42) und ein zweites Element zur Frequenzverdopplung (SHG) (43), und/oder
das Mittel zur Abwärtskonversion (DC) zwei Elemente zur Abwärtskonversion (DC) (45, 46) umfasst, vorzugsweise ein erstes Element zur Abwärtskonversion (DC) (45) und ein zweites Element zur Abwärtskonversion (DC) (46).

9. Quelle nach Anspruch 8,
**dadurch gekennzeichnet, dass**
die erste Steuervorrichtung (44) zwischen dem ersten (42) und dem zweiten Element zur Frequenzverdopplung (SHG) (43) angeordnet ist, vorzugsweise in der polarisationserhaltenden Faser (41) zwischen dem ersten (42) und dem zweiten Element zur Frequenzverdopplung (SHG) (43).

10. Quelle nach einem der Ansprüche 1 bis 9,
**dadurch gekennzeichnet, dass**
der Laser (2) einen gepulsten Laserstrahl erzeugt, vorzugsweise mit einer Wiederholungsrate von bis zu 10 kHz, vorzugsweise bis zu 1 MHz, noch bevorzugter von mehr als 100 MHz.

11. System zur Quantenschlüsselverteilung (QKD), umfassend eine Quelle (1) gemäß einem der Ansprüche 1 bis 10, ein Netzwerk (7) sowie mindestens einen ersten und einen zweiten Empfänger (8),
wobei jedes verschränkte Photonenpaar ein Signal-Photon und ein Idler-Photon umfasst, und
wobei das Netzwerk (7) mindestens einen ersten Quantenkanal (70) und einen zweiten Quantenkanal (70) umfasst, wobei der erste Quantenkanal (70) zwischen der Quelle (1), vorzugsweise zwischen dem ersten WDM-Ausgangsanschluss der Quelle (1), und dem ersten Empfänger (8) angeordnet ist, wodurch die Übertragung von Signal-Photonen von der Quelle (1) zu dem ersten Empfänger (8) ermöglicht wird, und der zweite Quantenkanal (70) zwischen der Quelle (1), vorzugsweise zwischen dem zweiten WDM-Ausgangsanschluss der Quelle (1), und dem zweiten Empfänger (8) angeordnet ist, wodurch die Übertragung von Idler-Photonen von der Quelle (1) zu dem zweiten Empfänger (8) ermöglicht wird, und
die Empfänger (8) jeweils ein Messmittel und eine Logik umfassen,
**dadurch gekennzeichnet, dass**
die Quelle (1) die Einstellung der ersten und/oder zweiten Steuervorrichtung (44, 50) oder Informationen über den Zustand des erzeugten Photonenpaares an den ersten und/oder zweiten Empfänger (8) überträgt, sodass durch den ersten und zweiten Empfänger (8) mittels Quantenschlüsselverteilung (QKD) ein Schlüssel erzeugbar ist.

12. Verfahren zur Erzeugung polarisationsverschränkter Photonenpaare zur Quantenschlüsselverteilung (QKD), wobeidie polarisationsverschränkten Photonenpaare vorzugsweise zur Erzeugung eines Schlüssels zwischen zwei Empfängern (8) mittels Quantenschlüsselverteilung (QKD) verwendet werden, umfassend eine Quelle (1) mit einem Laser (2), einen Zirkulator (3), einen faserbasierten Sagnac-Loop (4) mit einem Mittel zur Frequenzverdopplung (SHG) und einem Mittel zur Abwärtskonversion (DC), ein Mittel zum Wellenlängenmultiplexen (WDM) (5), eine erste Steuervorrichtung (44) und eine zweite Steuervorrichtung (55) sowie umfassend ein Netzwerk (7) und mindestens einen ersten und einen zweiten Empfänger (8),
wobei die erste Steuervorrichtung einen Phasenmodulator umfasst und dazu geeignet ist, zwischen mindestens einem ersten und einem zweiten Schaltzustand der ersten Steuervorrichtung umzuschalten, und die zweite Steuervorrichtung einen Polarisationsmodulator umfasst und dazu geeignet ist, zwischen mindestens einem ersten und einem zweiten Schaltzustand der zweiten Steuervorrichtung umzuschalten,
wobei das Verfahren die Schritte umfasst
i) Erzeugung eines Laserstrahls durch den Laser (2) und Führung des Laserstrahls zu dem Sagnac-Loop (4), vorzugsweise Führung durch den Zirkulator (3) zu dem Sagnac-Loop (4),
ii) Erzeugung eines verschränkten Photonenpaares in dem faserbasierten Sagnac-Loop (4) durch
- Erzeugung eines Pump-Photons durch Frequenzverdopplung mittels des Laserstrahls und dem Mittel zur Frequenzverdopplung (SHG) sowie
- Erzeugung eines Photonenpaares durch spontane parametrische Abwärtskonversion (SPDC) mittels des Pump-Photons und dem Mittel zur Abwärtskonversion (DC),
iii) Führung des verschränkten Photonenpaares von dem faserbasierten Sagnac-Loop (4) zu dem Mittel zum Wellenlängenmultiplexen (WDM) (5), vorzugsweise Führung durch den Zirkulator (3) zu dem Mittel zum Wellenlängenmultiplexen (WDM) (5),
iv) Übertragung des Signal- und Idler-Photons des verschränkten Photonenpaares an den ersten und den zweiten Empfänger (8) durch das Wellenlängenmultiplexverfahren (WDM) und das Netzwerk (7),
v) Polarisationsmessung des Signal- und Idler-Photons des verschränkten Photonenpaares durch den ersten und den zweiten Empfänger (8),
vi) Wiederholung der Schritte i) bis v), vorzugsweise so lange, bis von dem ersten und zweiten Empfänger (8) genügend Photonen detektiert wurden, um einen Schlüssel mittels Quantenschlüsselverteilung (QKD) zu erzeugen,
vii) Erzeugung eines Schlüssels, vorzugsweise durch zusätzliche Schritte eines Quantenschlüsselverteilungsprotokolls,
**dadurch gekennzeichnet, dass**
der Zustand jedes erzeugten verschränkten Photonenpaares durch die erste Steuervorrichtung (44) in Schritt ii) und die zweite Steuervorrichtung (50) in Schritt iv) gesteuert wird, und
die Quelle (1) die Einstellungen der ersten und zweiten Steuervorrichtung (44, 50) aus Schritt ii) und iv) oder Informationen über den Zustand des erzeugten Photonenpaares an den ersten und/oder den zweiten Empfänger (8) überträgt, sodass der erste und zweite Empfänger (8) in Schritt vii) einen Schlüssel erzeugen können.

13. Verfahren nach Anspruch 12,
**dadurch gekennzeichnet, dass**
für die Schlüsselerzeugung in Schritt vii) die Einstellung der ersten und/oder zweiten Steuervorrichtung (44, 50) oder die Information über den Zustand des verschränkten Photonenpaares von einem oder mehreren Empfängern (8) verwendet wird, um an dem ersten und zweiten Empfänger (8) denselben Schlüssel zu erzeugen.

14. Verfahren nach einem der Ansprüche 12 oder 13,
**dadurch gekennzeichnet, dass**
zur Schlüsselerzeugung in Schritt vii) eine Bitumkehrung des Messergebnisses abhängig von der Messbasis und/oder der Einstellung der ersten und/oder zweiten Steuervorrichtung (44, 50) oder der Informationen des Zustands des verschränkten Photonenpaares durch den ersten und/oder zweiten Empfänger (8) durchgeführt wird, um an dem ersten und zweiten Empfänger (8) denselben Schlüssel zu erzeugen.

## Revendications

1. Source de paires de photons intriqués par polarisation pour la distribution de clés quantiques (QKD), les paires de photons intriqués par polarisation étant de préférence utilisées pour la génération d'une clé par la distribution de clés quantiques (QKD),
comprenant un laser (2), un circulateur (3), une boucle de Sagnac à fibre optique (4) et un dispositif de multiplexage en longueur d'onde (WDM) (5), le laser (2) générant un faisceau laser et le faisceau laser est guidé à travers le circulateur (3) vers la boucle de Sagnac à fibre optique (4), et
dans laquelle la boucle de Sagnac à fibre optique (4) comprend un séparateur de faisceau polarisant (PBS) et une fibre à maintien de polarisation (41), un moyen de génération de seconde harmonique (SHG) et un moyen de conversion vers le bas (DC), le moyen de génération de seconde harmonique (SHG) étant pompé par le faisceau laser et générant des photons de pompage, et le moyen de conversion vers le bas (DC) étant pompé par les photons de pompage et générant des paires de photons, et
dans laquelle le séparateur de faisceau polarisant (PBS), la fibre à maintien de polarisation (41), le dispositif de génération de seconde harmonique (SHG) et le dispositif de conversion vers le bas (DC) sont disposés selon une configuration de Sagnac afin de générer des paires de photons intriqués par polarisation, et
dans laquelle les paires de photons intriqués par polarisation sont acheminées depuis la boucle de Sagnac à fibre optique (4) vers le multiplexeur en longueur d'onde (WDM) (5) en passant par le circulateur (3), et
dans laquelle le dispositif de multiplexage en longueur d'onde (WDM) (5) comprend au moins deux ports de sortie WDM,
**caractérisée en ce que**
la source (1) comprend un premier moyen de commande (44) disposé dans la boucle de Sagnac à fibre optique (4) et un deuxième moyen de commande (50) disposé en aval d'un ou plusieurs ports de sortie WDM,
le premier moyen de commande (44) et/ou le deuxième moyen de commande (50) commandent l'état des paires de photons intriqués par polarisation, et le premier moyen de commande (44) comprend un modulateur de phase et est capable de basculer entre au moins un premier et un deuxième état de commutation du premier moyen de commande (44), et le deuxième moyen de commande (50) comprend un modulateur de polarisation et est capable de basculer entre au moins un premier et un deuxième état de commutation du deuxième moyen de commande (50).

2. Source selon la revendication 1,
**caractérisée en ce que**
la source (1) génère des paires de photons intriqués dans au moins quatre états différents, de préférence quatre états d'intrication totale.

3. Source selon l'une des revendications 1 ou 2,
**caractérisée en ce que**
la fréquence de commutation des premier et/ou deuxième moyens de commande (44, 50) atteint jusqu'à 10 kHz, de préférence jusqu'à 1 MHz et, de manière encore plus préférable, plus de 100 MHz.

4. Source selon l'une des revendications 1 à 3,
**caractérisée en ce que**
le modulateur de phase est un modulateur électro-optique (EOM) ou un modulateur acousto-optique (AOM) comportant un cristal non linéaire ou un guide d'ondes.

5. Source selon l'une des revendications 1 à 4,
**caractérisée en ce que**
le premier moyen de commande (44) applique une variation de phase de 0 < Δ*φ* < 2*π* à l'état, de préférence en basculant entre le premier et le deuxième état de commutation du premier moyen de commande (44).

6. Source selon l'une des revendications 1 à 5,
**caractérisée en ce que**
le modulateur de polarisation est un modulateur électro-optique (EOM) ou un modulateur acousto-optique (AOM) comportant un cristal non linéaire, un guide d'ondes ou une lame d'ondes à commutation rapide.

7. Source selon l'une des revendications 1 à 6,
**caractérisée en ce que**
le deuxième moyen de commande (50) applique une transformation unitaire de la polarisation d'au moins un photon de la paire de photons intriqués.

8. Source selon l'une des revendications 1 à 7,
**caractérisée en ce que**
le dispositif de génération de seconde harmonique (SHG) comprend deux éléments non linéaires de génération de seconde harmonique (SHG) (42, 43), de préférence un premier élément de génération de seconde harmonique (SHG) (42) et un deuxième élément de génération de seconde harmonique (SHG) (43), et/ou
le dispositif de conversion vers le bas (DC) comprend deux éléments de conversion vers le bas (DC) (45, 46), de préférence un premier élément de conversion vers le bas (DC) (45) et un deuxième élément de conversion vers le bas (DC) (46).

9. Source selon la revendication 8,
**caractérisée en ce que**
le premier moyen de commande (44) est situé entre le premier élément (42) et le deuxième élément (43) de génération de seconde harmonique (SHG), de préférence dans la fibre à maintien de polarisation (41) entre le premier élément (42) et le deuxième élément (43) de génération de seconde harmonique (SHG).

10. Source selon l'une des revendications 1 à 9,
**caractérisée en ce que**
le laser (2) génère un faisceau laser pulsé, de préférence avec une fréquence de répétition allant jusqu'à 10 kHz, de préférence jusqu'à 1 MHz et, de manière encore plus préférable, supérieure à 100 MHz.

11. Système de distribution de clés quantiques (QKD), comprenant une source (1) selon l'une des revendications 1 à 10, un réseau (7) et au moins un premier et un deuxième récepteurs (8),
chaque paire de photons intriqués comprenant un photon de signal et un photon idler, et
le réseau (7) comprenant au moins un premier canal quantique (70) et un deuxième canal quantique (70), le premier canal quantique (70) étant disposé entre la source (1), de préférence entre le premier port de sortie WDM de la source (1), et le premier récepteur (8), permettant la transmission de photons de signal de la source (1) vers le premier récepteur (8), et le deuxième canal quantique (70) est disposé entre la source (1), de préférence entre le deuxième port de sortie WDM de la source (1), et le deuxième récepteur (8), permettant la transmission de photons idler de la source (1) vers le deuxième récepteur (8), et
les récepteurs (8) comprennent chacun un dispositif de mesure et une unité logique,
**caractérisée en ce que**
la source (1) transmet le réglage du premier et/ou du deuxième moyen de commande (44, 50) ou des informations relatives à l'état de la paire de photons générée au premier et/ou au deuxième récepteur (8) afin de permettre au premier et/ou au deuxième récepteur (8) de générer une clé par distribution de clés quantiques (QKD).

12. Procédé de génération de paires de photons intriqués par polarisation pour la distribution de clés quantiques (QKD), les paires de photons intriqués par polarisation étant de préférence utilisées pour la génération d'une clé entre deux récepteurs (8) par la distribution de clés quantiques (QKD), comprenant une source (1) avec un laser (2), un circulateur (3), une boucle de Sagnac à fibre optique (4) comportant un moyen de génération de seconde harmonique (SHG) et un moyen de conversion vers le bas (DC), un moyen de multiplexage en longueur d'onde (WDM) (5), un premier moyen de commande (44) et un second moyen de commande (55), et comprenant un réseau (7) et au moins un premier et un second récepteurs (8),
dans lequel le premier moyen de commande comprend un modulateur de phase et est capable de basculer entre au moins un premier et un deuxième état de commutation du premier moyen de commande, et le deuxième moyen de commande comprend un modulateur de polarisation et est capable de basculer entre au moins un premier et un deuxième état de commutation du deuxième moyen de commande,
la méthode comprenant les étapes suivantes
i) la génération d'un faisceau laser par le laser (2) et l'acheminement du faisceau laser vers la boucle de Sagnac (4), de préférence vers la boucle de Sagnac (4) via le circulateur (3),
ii) la génération d'une paire de photons intriqués dans la boucle de Sagnac à fibre optique (4) par
- la génération d'un photon de pompage par génération de seconde harmonique à l'aide du faisceau laser et du dispositif de génération de seconde harmonique (SHG), et
- la génération d'une paire de photons par conversion paramétrique spontanée vers le bas (SPDC) à l'aide du photon de pompage et du dispositif de conversion vers le bas (DC),
iii) le guidage de la paire de photons intriqués depuis la boucle de Sagnac à fibre optique (4) vers le dispositif de multiplexage en longueur d'onde (WDM) (5), de préférence via le circulateur (3) vers le dispositif de multiplexage en longueur d'onde (WDM) (5),
iv) la transmission du photon de signal et du photon idler de la paire de photons intriqués vers les premier et deuxième récepteurs (8) via le multiplexage en longueur d'onde (WDM) et le réseau (7),
v) la mesure de la polarisation du photon de signal et du photon idler de la paire de photons intriqués par le premier et le deuxième récepteur (8),
vi) la répétition des étapes i) à v), de préférence jusqu'à ce qu'un nombre suffisant de photons soit détecté par les premier et deuxième récepteurs (8) pour générer une clé par distribution quantique de clés (QKD),
vii) la génération d'une clé, de préférence au moyen d'étapes supplémentaires d'un protocole de distribution de clés quantiques,
**caractérisée en ce que**
l'état de chaque paire de photons intriqués générée est contrôlé par le premier moyen de commande (44) à l'étape ii) et par le deuxième moyen de commande (50) à l'étape iv), et
afin de permettre au premier et au deuxième récepteur (8) de générer une clé à l'étape vii), la source (1) transmet le réglage des premier et deuxième moyens de commande (44, 50) des étapes ii) et iv) ou des informations sur l'état de la paire de photons générée au premier et/ou au deuxième récepteur (8).

13. Procédé selon la revendication 12,
**caractérisée en ce que**
pour la génération de la clé à l'étape vii), le réglage des premier et/ou deuxième moyens de commande (44, 50) ou les informations relatives à l'état de la paire de photons intriqués sont utilisés par un ou plusieurs récepteurs (8) afin de générer la même clé au niveau des premier et deuxième récepteurs (8).

14. Procédé selon l'une des revendications 12 ou 13,
**caractérisée en ce que**
pour la génération de clé à l'étape vii), afin de générer la même clé au niveau du premier et du deuxième récepteur (8), l'inversion de bits du résultat de la mesure, en fonction de la base de mesure et/ou du réglage du premier et/ou du deuxième moyen de commande (44, 50) ou des informations relatives à l'état de la paire de photons intriqués, est effectuée par le premier et/ou le deuxième récepteur (8).
